# EUROPEAN PATENT APPLICATION

(11) **EP 1 014 320 A1**
(43) Date of publication of application: **28.06.2000**
(21) Application number: 99310201.1
(22) Date of filing: 17.12.1999
(51) Int. Cl.: G07G 1/12, G06F 17/60, G07F 7/08

(54) **Method of and apparatus for maintaining a customer loyalty program on a smart card**

(30) Priority: 21.12.1998 US 217543
(71) Applicant: NCR INTERNATIONAL INC., Dayton, Ohio 45479 (US)
(72) Inventor: Chasko, Stephen John, Flowery Branch, Georgia 30542 (US)
(74) Representative: Williamson, Brian

(57) **Abstract**

A method of operating a retail checkout terminal includes the step of generating an item-entered control signal when a first item of a customer's items for purchase is entered into the retail checkout terminal. The method also includes the step of storing a first record corresponding to the first item in a terminal transaction table maintained in a terminal memory device associated with the retail checkout terminal in response to generation of the item-entered control signal. Moreover, the method includes the step of transferring the first record from the terminal transaction table to a card transaction table maintained in a card memory device associated with a smart card. A retail checkout terminal is also disclosed.

## Description

The present invention relates generally to a retail system, and more particularly to a method of and apparatus for maintaining a customer loyalty program on a smart card.

In the retail industry, it is common for a retailer, such a grocery store or chain of grocery stores, to operate a customer loyalty program. A customer loyalty program is a program which attempts to reward those customers that, for example, frequently shop at the retailer's store and/or those customers which spend large amounts of money at the retailer's store. Such loyalty programs often utilize a marketing strategy commonly referred to as customer-specific marketing. In the case of customer-specific marketing, the retailer attempts to advertise products to individual customers based on the customers previous buying habits. For example, the retailer may utilize a customer-specific marketing strategy to offer a beer coupon to a customer which regularly buys beer, but would offer a different coupon to a customer which does not have a history of buying beer from the retailer.

Customer loyalty programs are typically administered by assigning each customer enrolled in the program a loyalty card. The loyalty card typically has a magnetic strip thereon which may be swiped through a magnetic strip card reader located at a checkout terminal associated with the retailer's operation. The magnetic strip has stored therein a code which identifies the customer by either name or customer number. Once, the card reader has read the customer's name or number from the card, the processing unit associated with the checkout terminal communicates with a customer database in order to retrieve retail history information associated with the customer. For example, such retail history information may include the number of times the customer has shopped in the retailer's store in the previous six months, the dollar amount spent by the customer in the previous six months, a list of each of the items purchased by the customer in the last six months, etc. Once the customer's transaction is complete, a record of the customer's transaction including the total dollar amount of the transaction along with a list of each of the items purchased by the customer is then stored in the retailer's customer database. It should be appreciated that such a customer database may be maintained locally (i.e. at a single store), regionally (at a site which services the retailer's stores within a given region), or globally (at the retailer's headquarters which services all of the retailer's stores).

Hence, at any given time, the customer database maintains a profile for each of the retailer's customers which includes the customer's retail history information. Periodically, when a given customer's shopping habits meet certain criteria (e.g. the customer spends a requisite amount of money within a given time period), the retailer may decide to reward the customer. The retailer may print a special coupon for the customer or may alternatively print a gift certificate for the customer. It should be appreciated that the coupon or gift certificate may be customized based on the purchasing habits of the customer. For example, a coupon for a free bag of pretzels may be printed for a highly-valued customer that routinely purchases beer from the retailer.

Administration of customer loyalty programs in the manner previously discussed has a number of drawbacks associated therewith. For example, administration of customer loyalty programs in the manner previously discussed undesirably requires the retailer to dedicate large, often dedicated, amounts of computing and memory resources to maintenance of the customer database. In particular, the retailer must maintain a large network system in order to track the activity of each customer within the loyalty program. Moreover, use of magnetic strip cards is undesirably susceptible to fraud since magnetic strip programming units are relatively inexpensive and accessible.

What is needed therefore is a method and apparatus for administering a customer loyalty program which overcomes one or more of the above-mentioned drawbacks. What is also needed is a method and apparatus for administering a customer loyalty program which reduces the amount of hardware and software necessary to administer the program relative to systems which have heretofore been designed.

In accordance with a first embodiment of the present invention, there is provided a method of operating a retail system having a number of retail checkout terminals associated therewith. The method includes the step of retrieving retail history information associated with a customer's previous use of the number of retail checkout terminals from a customer profile stored in a card memory device of a smart card. The method also includes the step of operating one of the number of retail checkout terminals so as to perform a customer-specific retail function based on the retail history information.

In accordance with a second embodiment of the present invention, there is provided a method of operating a retail checkout terminal. The method includes the step of generating an item-entered control signal when a first item of a customer's items for purchase is entered into the retail checkout terminal. The method also includes the step of storing a first record corresponding to the first item in a terminal transaction table maintained in a terminal memory device associated with the retail checkout terminal in response to generation of the item-entered control signal. Moreover, the method includes the step of transferring the first record from the terminal transaction table to a card transaction table maintained in a card memory device associated with a smart card.

In accordance with a third embodiment of the present invention, there is provided a retail checkout terminal. The retail checkout terminal includes an item entry device for entering a product code associated with an item for purchase. The retail checkout terminal also includes a smart card interface device which is operable to retrieve information from a card memory device of a smart card and transfer information to the card memory device of the smart card. The retail checkout terminal also includes a processing unit electrically coupled to both the item entry device and the smart card interface device. Moreover, the retail checkout terminal includes a terminal memory device electrically coupled to the processing unit. The terminal memory device has stored therein a plurality of instructions which, when executed by the processing unit, causes the processing unit to (a) retrieve retail history information associated with a customer's previous use of the retail checkout terminal from a customer profile stored in the card memory device of the smart card, and (b) operate the retail checkout terminal so as to perform a customer-specific retail function based on the retail history information.

It is therefore an object of the present invention to provide a new and useful method and apparatus of operating a retail checkout terminal.

An embodiment of the present invention will now be described, by way of example, with reference to the accompanying drawings, in which:
FIG. 1 is a perspective view of a retail checkout terminal in accordance with the present invention;
FIG. 2 is a simplified block diagram of the retail checkout terminal of FIG. 1;
FIG. 3 is a simplified block diagram of a smart card which incorporates the features of the present invention therein;
FIG. 4 is a flowchart which sets forth a general procedure for checking out items for purchase with the retail checkout terminal of FIG. 1;
FIG. 5 is a flowchart which sets forth a portion of the initialization step of the general procedure of FIG. 4 in greater detail;
FIG. 6 is a flowchart which sets forth a portion of the itemization step of the general procedure of FIG. 4 in greater detail; and
FIG. 7 is a flowchart which sets forth a portion of the finalization step of the general procedure of FIG. 4 in greater detail.

While the invention is susceptible to various modifications and alternative forms, a specific embodiment thereof has been shown by way of example in the drawings and will herein be described in detail. It should be understood, however, that there is no intent to limit the invention to the particular form disclosed, but on the contrary, the intention is to cover all modifications, equivalents, and alternatives falling within the scope of the invention.

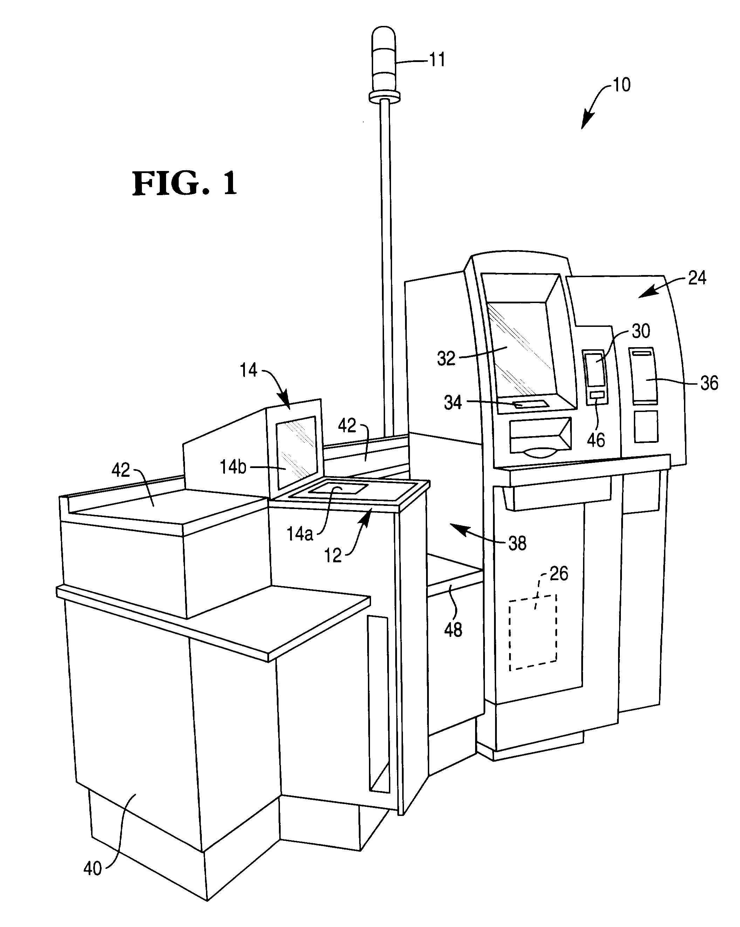

Referring now to FIG. 1, there is shown a self-service checkout terminal 10 for use in a retail business such as a grocery store. For purposes of the following discussion, the self-service checkout terminal 10 will be described in detail; however, it should be appreciated that an assisted checkout terminal (i.e. a retail checkout terminal which is operated by a store employee such as a checkout clerk) may be configured in a similar manner. The self-service checkout terminal 10 includes a status light device 11, a product scale 12, a scanner 14, a smart card interface device 30, a display monitor 32, a keypad 34, a printer 36, and a processing unit 26. The smart card interface device 30, the display monitor 32, the keypad 34, and the printer 36 may be provided as separate components, or alternatively may preferably be provided as components of an automated teller machine (ATM) 24.

The self-service checkout terminal 10 also includes a housing 40. The housing 40 has a bagwell 38 defined therein for accommodating one or more grocery bags (not shown). The bagwell 38 is configured to allow two or more grocery bags to be accessed by the customer at any given time thereby allowing a customer to selectively load various item types into the grocery bags. For example, the customer may desire to use a first grocery bag for household chemical items such as soap or bleach, and a second grocery bag for edible items such as meat and produce.

The scanner 14 conventionally scans or reads a product identification code such as a Universal Product Code (UPC), industrial symbol(s), alphanumeric character(s), or other indicia associated with an item to be purchased. One scanner which may be used as the scanner 14 of the present invention is a model number 7875 bi-optic scanner which is commercially available from NCR Corporation of Dayton, Ohio.

The scanner 14 is secured to the housing 40. In particular, the scanner 14 includes a first scanning window 14a and a second scanning window 14b. The first scanning window 14a is disposed within a top counter 42 of the housing 40 in a substantially horizontal manner, whereas the second scanning window 14b is disposed in a substantially vertical manner, as shown in FIG. 1. The product scale 12 is integrated with the scanner 14. More specifically, the product scale 12 is disposed substantially parallel to the scanning window 14a thereby enveloping the scanning window 14a. If an item such as produce is placed upon the product scale 12 or the first scanning window 14a, the product scale 12 may be used to determine the weight of the item.

The scanner 14 also includes a light source (not shown) such as a laser, a rotating mirror (not shown) driven by a motor (not shown), and a mirror array (not shown). In operation, a laser beam reflects off the rotating mirror and mirror array to produce a pattern of scanning light beams. As the product identification code on an item is passed over the scanner 14, the scanning light beams scatter off the code and are returned to the scanner 14 where they are collected and detected. The reflected light is then analyzed electronically in order to determine whether the reflected light contains a valid product identification code pattern. If a valid code pattern is present, the product identification code is then converted into pricing information which is then used to determine the cost of the item in a known manner.

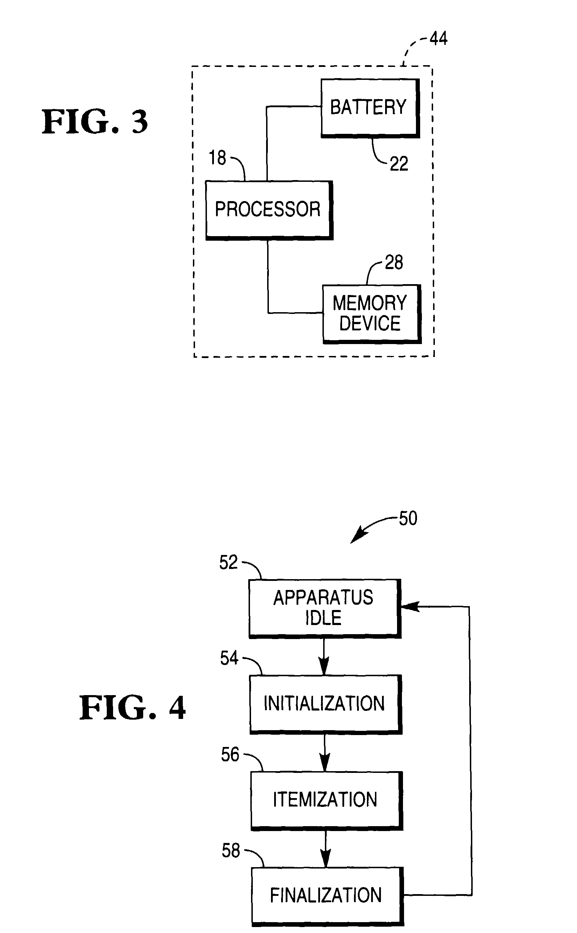

The smart card interface device 30 is provided to download information from or upload information to a smart card 44 (see FIG. 3). The smart card 44 may be inserted into a slot 46 of the smart card interface device 30 in order to be electrically coupled to the smart card interface device 30. In particular, the smart card interface device 30 includes electrical contacts (not shown) which correspond to electrical contacts (not shown) on the smart card 44 so as to allow communication between the smart card interface device 30 and the smart card 44 when the smart card 44 is positioned in the slot 46. The smart card 44 of the present invention may be embodied as the smart card disclosed in U.S. Patent Number 5,727,153 issued to Powell or any other commercially available smart card which has the hardware configuration to fit the needs of a given retail system such as a Cyberflex 16K Smart Card which is commercially available from Schlumberger Industries of Moorestown, New Jersey.

The smart card 44 includes a processor 18, a battery 22, and a card memory device 28. The processor 18 is electrically coupled to the battery 22 so as to provide power to the processor 18 and the card memory device 28. The processor 18 is electrically coupled to the card memory device 28 via a data communication line so as to selectively cause data to be stored in or received from the card memory device 28 when the smart card 44 is positioned in the smart card interface device 30.

The card memory device 28 maintains a customer profile of the customer to which the smart card 44 is assigned. In particular, the card memory device 28 has stored therein a customer profile which includes information such as the demographic information (e.g. name, address, age, income level, etc.) associated with the customer to which the smart card 44 was issued. It should be appreciated that such demographic information may be collected by the retailer and thereafter stored in the card memory device 28 when the customer initially registers or otherwise procures the smart card 44 from the retailer.

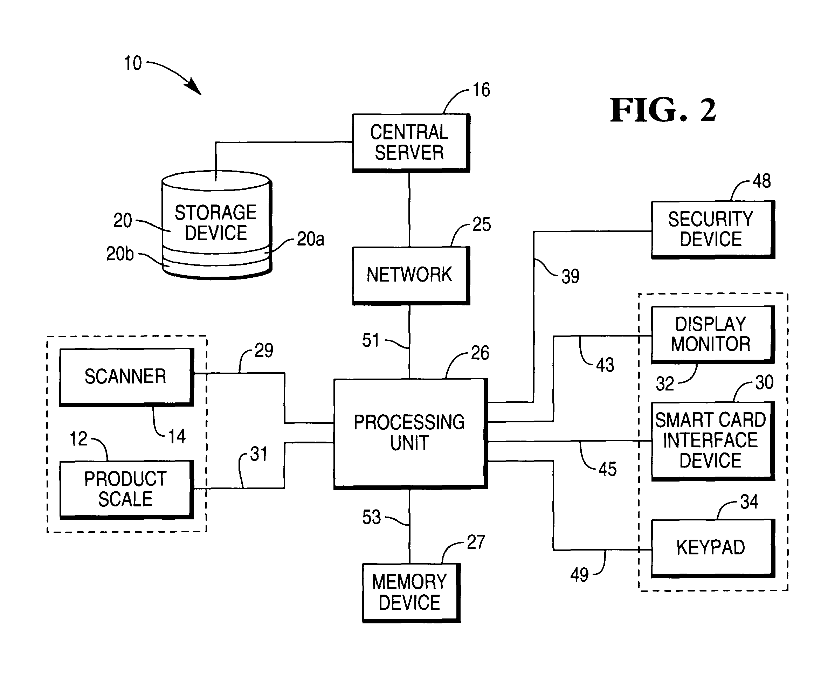

Such demographic information is generally useful to a retailer in determining the buying habits of particular groups of customers. For example, such demographic information may be downloaded from the customer's smart card 44 and thereafter stored in a customer demographic database 20a maintained on a mass storage device 20 associated with the retailer's central server 16 (see FIG. 2). In particular, each of the retail checkout terminals (e.g. the self-service checkout terminal 10) included in the retailer's operation is electrically coupled to the central server 16 via a network 25. The mass storage device 20 associated with the central server 16 maintains the customer demographic database 20a so that the retailer may monitor the purchasing habits of groups of customers. For example, the retailer may desire to know the dollar amount of a particular type of product that the retailer sells to a particular age group. Moreover, the retailer may wish to monitor the home addresses of its customers in order to determine the appropriate advertising range needed in order to adequately reach the retailer's customers.

The customer profile stored in the card memory device 28 of the smart card 44 also includes retail history information associated with the customer's previous use of the self-service checkout terminal 10 (or any other retail checkout terminal associated with the retailer's operation). What is meant herein by the term "retail history information" is information associated with a given customer's previous transactions and/or purchases from the retailer's operation. Examples of retail history information include the number of times the customer has shopped in the retailer's store or stores in a given time period (e.g. the previous six months), the dollar amount spent by the customer in a given time period, and a list of each of the items purchased by the customer during a given time period. What is meant herein by the phrase "previous use" is a prior retail checkout terminal session by a given customer in which the customer activated or otherwise "logged on" one of the retail checkout terminals 10 such as the self-service checkout terminal, completed a retail checkout transaction, and thereafter deactivated or otherwise "logged off' the retail checkout terminal 10. For example, if a customer checked out his or her items for purchase by use of the self-service checkout terminal 10 during the customer's visit to the retailer's store last week, such previous operation of the self-service checkout terminal 10 would be a previous use by the customer. Moreover, if a customer had his or her items for purchase checked out by a retail clerk operating an assisted checkout terminal during the customer's visit to the retailer's store last week, such previous use of the assisted checkout terminal would be a previous use by the customer. Hence, prior to completing his or her retail checkout transaction, a transaction table or list of the customer's items for purchase are stored in the card memory device 28 of the smart card 44. Such a list serves as a record of the customer's previous purchases.

It should be appreciated that such a list of previous purchases may be utilized in the administration of a customer loyalty program. In particular, an important component of a customer loyalty program is a record of the customer's previous purchasing habits from the retailer's store or stores. Hence, by maintaining an electronic list of the customer's previously purchased items, the retailer may utilize such information in order to reward loyal customers who spend relatively large dollar amounts at the retailer's store, or who purchase items with relatively large profit margins, or who fit any other criteria as established by the retailer.

Moreover, the retailer may utilize the electronic list of the customer's previously purchased items stored in the card memory device 28 in order to perform a customer-specific retail function with the self-service checkout terminal 10. What is meant herein by the term "customer-specific retail function" is a retail function which is customized for a given customer based on the purchasing habits of the customer. For example, the retailer may analyze the customer's electronic list in order to determine a specific item or item-type which the customer frequently purchases. Thereafter, the retailer may then store an electronic coupon relating to the specific item or item type in the card memory device 28 of the customer's smart card 44 in order to encourage the customer to purchase additional items. For instance, if the retailer determines from analysis of the electronic list stored on the customer's smart card that the customer purchases beer when shopping at the retailer's store, an electronic coupon for beer or a related item (e.g. pretzels) may be stored on the customer's smart card 44 for future redemption.

As a further example of a customer-specific retail function, the retailer may configure the self-service checkout terminal 10 to store an electronic gift certificate on the customer's smart card 44 based on the analysis of the electronic list stored in the card memory device 28. In particular, if the customer has spent (within a given time period) a dollar amount greater than or equal to a predetermined dollar amount, the retailer may configure the self-service checkout terminal 10 such that an electronic gift certificate is stored in the card memory device 28 of the customer's smart card 44. Thereafter, the customer may redeem the electronic gift certificate for merchandise from the customer's store.

Yet a further example of a customer specific retail function may include displaying a customized advertising message on the display monitor 32 of the self-service checkout terminal 10 based on the analysis of the electronic list stored it the card memory device 28 of the smart card 44. It should be appreciated that the customized advertising message may also be displayed on numerous other types of retail terminals included in the retailer's operation. For example, the customized advertising message may be displayed on an information kiosk in which the customer inserts his or her smart card 44 in order to obtain retail information from the kiosk.

The self-service checkout terminal also includes a security device 48. The security device 48 provides security from improprieties, such as theft, during operation of the self-service checkout terminal 10. As shown in FIG. 1, the security device 48 may be a scale which monitors the weight of items placed in the bagwell 38 (i.e. into one of the grocery bags) or onto the portion of the counter 42 which is located proximate the bagwell 38. It should be appreciated that a customer may place an item onto the portion of the counter 42 proximate the bagwell 38 subsequent to entering the item, but prior to placing the item into a grocery bag. For example, if a customer scans a loaf of bread, the customer may want to place the bread onto the portion of the counter 42 proximate the bagwell 38 until one of the grocery bags is nearly full thereby preventing the bread from being crushed. Hence, the scale 48 may be utilized to monitor the ingress and egress of items into and out of the bagwell 38 along with onto and off of the counter 42. Such monitoring is particularly useful for preventing items which have not been scanned from being placed into a grocery bag.

The security device 48 may also be embodied as numerous other types of devices. For example, the security device 48 may be embodied as a video system which captures video images associated with movement or placement of items throughout the area proximate the self-service checkout terminal 10. Moreover, the security device 48 may be embodied as a light curtain device which is 'tripped' when items are placed into or removed from the bagwell 38 or placed onto or off of the counter 42.

The display monitor 32 displays instructions which serve to guide a customer through a checkout procedure. For example, an instruction is displayed on the display monitor 32 which instructs the customer to enter an item into the self-service checkout terminal 10 by either passing the item over the scanner 14, or placing the item on the product scale 12 in order to obtain the weight of the item. The display monitor 32 is preferably a known touch screen monitor which can generate data signals when certain areas of the screen are touched by a customer.

The status light device 11 is provided in order to notify store personnel, such as a customer service manager, that intervention into the customer's transaction is needed. In particular, the status light device 11 may display a first colored light in order to notify store personnel that intervention is needed prior to the end of the customer's transaction. Alternatively, the status light device 11 may display a second colored light in order to notify store personnel that intervention is needed immediately.

Referring now to FIG. 2, there is shown a simplified block diagram of the self-service checkout terminal 10. The processing unit 26 is electrically coupled to the product scale 12, the scanner 14, the smart card interface device 30, the display monitor 32, the keypad 34, and the security device 48. The processing unit 26 is also electrically coupled to the network 25 and a memory device 27.

The processing unit 26 monitors output signals generated by the scanner 14 via a communication line 29. In particular, when the customer scans an item which includes a product identification code across the scanning windows 14a, 14b, an output signal indicative of the product identification code is generated on the communication line 29.

The processing unit 26 is coupled to the product scale 12 via a data communication line 31. In particular, when an item is placed thereon, the product scale 12 generates an output signal on the data communication line 31 indicative of the weight of the item.

The processing unit 26 communicates with the display monitor 32 through a data communication line 43. The processing unit 26 generates output signals on the data communication line 43 which cause various instructional messages to be displayed on the display monitor 32. The display monitor 32 may include known touch screen technology which can generate output signals when the customer touches a particular area of the display screen associated with the display monitor 32. The signals generated by the display monitor 32 are transmitted to the processing unit 26 via the data communication line 43.

The security device 48 is coupled to the processing unit 26 through a data communication line 39. Hence, when the security device 48 detects a security event (e.g. a weight increase on a scale or an interruption of a light curtain), the security device 48 communicates data indicative of the security event on the data communication line 39.

The keypad 34 is coupled to the processing unit 26 through a data communication line 49. The keypad 34 may include one or more of a known keypad or a touch pad. Moreover, the smart card interface device 30 is coupled to the processing unit 26 through a data communication line 45. The smart card interface device 30 may include any known smart card interface device which is capable of transferring data to and from the card memory device 28 of the smart card 44.

The processing unit 26 includes network interface circuitry (not shown) which conventionally permits the self-service checkout terminal 10 to communicate with the network 25 such as a LAN or WAN through a wired connection 51. The processing unit 26 communicates with the network 25 during the checkout procedure in order to obtain information such as pricing information associated with an item being scanned or otherwise entered, and also to verify customer credit approval when appropriate. The network interface circuitry associated with the self-service checkout terminal 10 may include a known Ethernet expansion card, and the wired connection 51 may include a known twisted-pair communication line. Alternatively, the network interface circuitry may support wireless communications with the network 25.

The processing unit 26 communicates with the memory device 27 via a data communication line 53. The memory device 27 is provided to maintain a number of databases associated with operation of the self-service checkout terminal 10. For example, the memory device maintains an electronic transaction table which includes a record of the product information associated with each item that is scanned, weighed, or otherwise entered during the customer's operation of the self-service checkout terminal 10. For example, if the customer scans a can of soup, the product identification number, the description of the soup, and the pricing information associated therewith is recorded in the transaction table in the memory device 27. Similarly, if the customer weighs a watermelon with the product scale 12 and then enters a product lookup code associated with watermelon via the keypad 34, product information associated with the watermelon is recorded in the transaction table. Moreover, if a customer enters a coupon or voucher, the information associated therewith would also be recorded in the transaction table.

It should therefore be appreciated that the sum of each of the items recorded in the transaction table (1) minus any reductions (e.g. coupons), and (2) plus any applicable taxes is the amount that the customer pays for his or her transaction. Moreover, data stored in the transaction table is printed out on the printer 36 (see FIG. 1) thereby generating a receipt for the customer at the end of his or her transaction. Yet further, it should also be appreciated that a copy of the data stored in the transaction table is transferred to the card memory device 28 of the smart card 44 in order to generate a similar transaction table (or a summary of the transaction table) in the card memory device 28 thereby generating retail history information in the form of a record of the customer's transaction.

In operation, the processing unit 26 controls the various components associated with the self-service checkout terminal 10 in order to provide for the administration of a customer loyalty program. For example, as shall be discussed below in more detail, when a given customer inserts his or her smart card 44 into the card slot 46 of the smart card interface device 30 in order to commence a checkout transaction, the processing unit 26 causes the customer profile containing the customer's demographic information to be retrieved from the card memory device 28 of the customer's smart card 44. Such customer demographic information is useful to the retailer to monitor demographic characteristics of the retailer's customers.

The processing unit 26 then operates the self-service checkout terminal 10 so as to allow the customer to enter his or her items for purchase by, for example, allowing the customer to scan each of his or her items for purchase with the scanner 14. An item-entered control signal is generated in response to entry of each of the customer's items for purchase. Generation of the item-entered control signal causes a record associated with the item to be stored in the memory device 27 associated with the self-service checkout terminal 10. After the customer has entered his or her final item for purchase, the processing unit 26 operates the self-service checkout terminal 10 so as to allow the customer to tender payment for his or her items for purchase and also print a receipt for the customer. Once payment has been tendered, an end-of-transaction control signal is generated which causes a copy of the transaction table (or a summary thereof) to be stored in the card memory device 28 of the customer's smart card 44 so as to update the retail history information included in the customer profile of the customer's smart card 44.

Thereafter, the updated retail history information in the customer profile of the customer's smart card 44 is then analyzed so as to allow the self-service checkout terminal 10 to perform a customer-specific retail function. In particular, the processing unit 26 performs an analysis of the updated customer profile so as to compare the contents thereof to predetermined eligibility requirements in order to determine if the customer qualifies for an incentive award such as a customized coupon or gift certificate. If the customer qualifies for a customized coupon or gift certificate, the award is stored electronically in the card memory device 28 of the customer's smart card 44 by use of the card interface device 30.

Referring now to FIG. 4, there is shown a flowchart which sets forth a general procedure 50 for checking out items through the self-service checkout terminal 10. It should be appreciated that when the customer arrives at the self-service checkout terminal 10, the terminal 10 is in an idle state (step 52). An initialization step 54 is executed prior to checking out items for purchase. In particular, one or more initialization instructions are displayed on the display monitor 32 which instruct the customer to insert his or her smart card 44 into the smart card interface device 30 in order to identify himself or herself. Demographic information associated with the customer is then read from the customer profile stored in the card memory device 28 of the smart card 44. Such demographic information may then be stored, along with any corresponding transactional information, in the customer demographic database 20a maintained on the mass storage device 20 associated with the retailer's central server 16. For example, the retailer may configure the self-service checkout terminal 10 such that a record is stored in the customer demographic database 20a based on the age of the customers which purchase a particular item.

At the completion of the initialization step 54, the routine 50 advances to an itemization step 56 where the customer enters individual items for purchase by scanning the items across the scanner 14. Moreover, in step 56, the customer may enter items, such as produce items or the like, by weighing the items with the product scale 12, and thereafter entering a product lookup code associated with the item via either the keypad 34 or by touching a particular area of the display monitor 32. Further, in step 56 the customer may enter an item by manually entering the product identification code associated with the item via use of the keypad 34. Such manual entry of an item may be necessary for items which would otherwise be entered via the scanner 14 if the product identification code printed on the item is not readable by the scanner 14.

At the completion of the itemization step 56, the routine 50 advances to a finalization step 58 in which (1) a grocery receipt is printed by the printer 36, and (2) payment is tendered by either inserting currency into a cash acceptor (not shown), charging a credit card or debit card account, or decreasing a value amount stored on the customer's smart card 44 via the smart card interface device 30. It should be appreciated that in the case of when a customer inserts currency into the cash acceptor, the self-service checkout terminal 10 may provide change via a currency dispenser (not shown) and a coin dispenser (not shown). Also, during the finalization step 58, the customer profile stored on the customer's smart card 44 is update to include a record of the customer's transaction. After completion of the finalization step 58, the routine 50 returns to step 52 in which the self-service checkout terminal 10 remains in the idle condition until a subsequent customer initiates a checkout procedure.

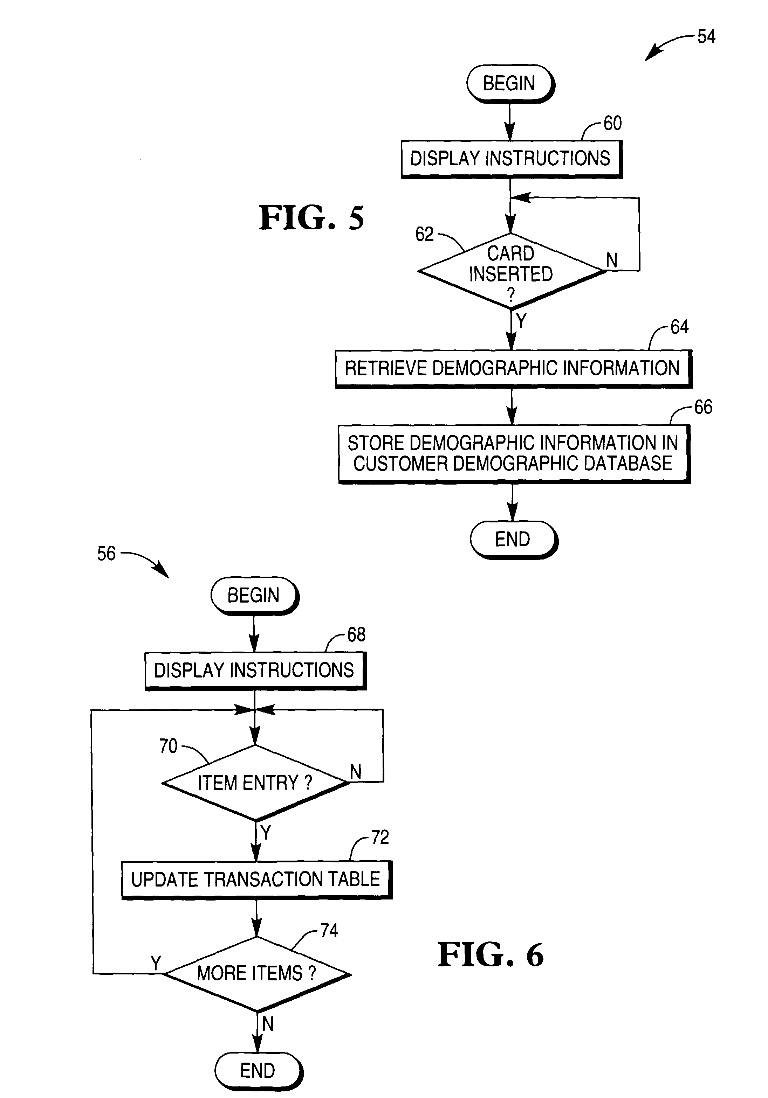

Referring now to FIG. 5, there is shown a flowchart setting forth a portion of the initialization step 54 in greater detail. The routine 54 begins with step 60 in which a message is displayed on the display monitor 32 which instructs the customer to insert his or her smart card 44 into the card slot 46 of the smart card interface device 30 in order to commence a checkout transaction. The routine 54 then advances to step 62.

In step 62, the processing unit 26 determines if the customer has inserted his or her smart card 44 into the card slot 46 of the card interface device 30. In particular, the processing unit scans or reads the data communication line 45 in order to determine if the smart card interface device 30 has detected insertion of the customer's smart card 44 into the card slot 46 thereof. If the customer has inserted his or her smart card 44 into the card slot 46 of the smart card interface device 30, the routine 54 advances to step 64. If the customer has not inserted his or her smart card 44 into the card slot 46 of the smart card interface device 30, the routine 54 loops back to monitor for subsequent insertion of the customer's smart card 44.

In step 64, the processing unit 26 retrieves the customer's demographic information from the card memory device 28 of the customer's smart card 44. In particular, the processing unit 26 communicates with the smart card interface device 30 in order to cause the smart card interface device 30 to download or otherwise retrieve the customer's demographic information from the card memory device 28 of the customer's smart card 44. Once the customer's demographic information has been retrieved from the card memory device 28 of the customer's smart card 44, the routine 54 advances to step 66.

In step 66, the processing unit 26 communicates with the retailer's central server 16 via the network 25 so as to create a record of the customer's demographic information. In particular, the processing unit 26 communicates with the central server 16 in order to cause a record of the customer's demographic information to be stored in the customer demographic database 20a maintained on the mass storage device 20 associated with the retailer's central server 16. It should be appreciated that additional transactional information may also be subsequently stored in the customer demographic database 20a throughout the customer's transaction. For example, if the retailer desires to collect demographic information associated with the customers which purchase a particular item or type of item, such information may also be stored in the customer demographic database 20a. Once the customer's demographic information has been stored in the customer demographic database 20a, the routine 54 then ends thereby advancing the general routine 50 (see FIG. 4) to the itemization step 56.

Referring now to FIG. 6, there is shown a flowchart which shows a portion of the itemization step 56 in greater detail. After the initialization step 54 (see FIGS. 4 and 5) is completed, the routine 56 advances to step 68 in which a message is displayed on the display monitor 32 which instructs the customer to enter an item by either (1) passing or otherwise scanning individual items across or adjacent the scanner 14 with the item's product identification code facing the scanning windows 14a, 14b, (2) placing an individual item on the product scale 12 in order to be weighed, or (3) manually entering the product identification code associated with an item with the keypad 34. The routine 56 then advances to step 70.

In step 70, the processing unit 26 determines whether an item has been entered into the self-service checkout terminal 10. In particular, the processing unit 26 determines if (1) the scanner 14 has successfully read or otherwise captured the product identification code associated with an item, (2) the product identification code associated with an item has been entered via the touch screen portion of the display monitor 32, or (3) the product identification code associated with an item has been entered via the keypad 34. More specifically, the scanner 14 generates an output signal which is sent to the processing unit 26 once the scanner 14 successfully reads the product identification code associated with the item. Similarly, the display monitor 32 and the keypad 34 generate an output signal which is sent to the processing unit 26 once the product identification code has been entered by the customer. If an item is successfully entered into the self-service checkout terminal 10, an item-entered control signal is generated and the routine 56 advances to step 72. If an item is not successfully entered into the self-service checkout terminal 10, the item-entered control signal is not generated, and the routine 56 loops back to monitor subsequent entry of an item.

In step 72, the processing unit 26 adds a record of the item entered in step 70 to the transaction table maintained in the memory device 27. In particular, the processing unit 26 communicates with the network 25 to obtain product information (e.g. description and price) associated with the entered item from a master product database 20b maintained on the mass storage device 20. Thereafter, the processing unit 26 updates the transaction table. More specifically, the processing unit 26 generates an output signal which is sent to the memory device 27 which causes the transaction table maintained therein to be updated to include the retrieved product information associated with the entered item. It should be appreciated that the contents of the transaction table are used by the self-service checkout terminal 10 for purposes of generating a grocery bill and receipt at the end of the transaction. Moreover, as shall be discussed in more detail below, an electronic copy of the contents of the transaction table (or a summary thereof) is stored in the card memory device 28 of the customer's smart card 44 so as to generate a record of the customer's transaction for use in the administration of a customer loyalty program by the retailer. The routine 56 then advances to step 74.

In step 74, the processing unit 26 monitors output from the keypad 34 and the display monitor 32 in order to determine whether there are more items to be entered. In particular, a message is displayed on the display monitor 32 instructing the customer to touch a particular touch screen area of the display monitor 32, or to touch a particular key associated with the keypad 34, when the customer has completed entering all of his or her items for purchase.

If a particular output is detected from either the keypad 34 or the display monitor 32, the processing unit 26 determines that the itemization step 56 is complete and the routine 56 then ends thereby advancing the routine 50 (see FIG. 4) to the finalization step 58 in order to allow the customer to tender payment for his or her items for purchase. If a particular output is not detected from either the keypad 34 or the display monitor 32, the processing unit 26 determines that the customer has additional items for purchase to be entered, and the routine 56 loops back to step 70 to monitor entry of subsequent items.

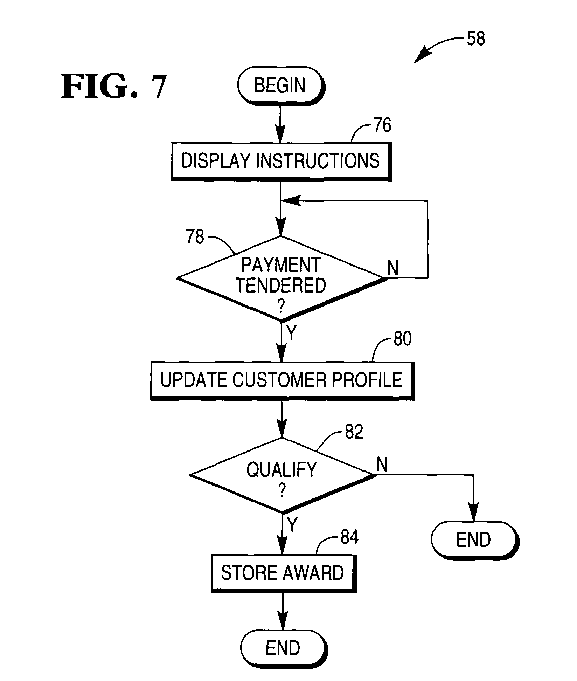

Referring now to FIG. 7, there is shown a flowchart which shows a portion of the finalization step 58 in greater detail. After the itemization step 56 (see FIGS. 4 and 6) is completed, the routine 58 advances to step 76 in which a message is displayed on the display monitor 32 which instructs the customer to tender payment for his or her items for purchase by either (1) inserting currency into a currency acceptor (not shown), (2) inserting a debit or credit card into a magnetic card reader (not shown), or (3) inserting a smart card which has a credit and/or debit payment application associated therewith. It should be appreciated that the smart card 44 may be configured as a multiple application smart card which may be utilized to (1) maintain the customer loyalty program, and (2) include credit and/or debit payment applications. It should be further appreciated that the smart card interface device 30 may also be configured to include magnetic strip reading hardware thereby eliminating the need to provide a separate card reader for reading magnetic strip based debit and credit cards. The routine 56 then advances to step 78.

In step 78, the processing unit 26 determines if the customer has tendered payment for his or her items for purchase. In particular, the processing unit 26 communicates with the currency acceptor and the debit/credit card reader (or the smart card interface device 30, if equipped to read debit/credit cards) in order to determine if the customer has tendered payment for his or her items for purchase. If the customer has tendered payment for his or her items for purchase, an end-of-transaction control signal is generated and the routine 58 advances to step 80. If the customer has not tendered payment for his or her items for purchase, the routine 58 loops back to monitor subsequent tendering of payment by the customer.

In step 80, the processing unit 26 updates the retail history information stored in the customer profile maintained on the customer's smart card 44. In particular, the processing unit 26 operates the smart card interface device 30 such that an electronic copy of the transaction table maintained in the terminal memory device 27 (or a summary thereof) is uploaded or otherwise stored in the card memory device 28 of the customer's smart card 44. It should be appreciated that such an electronic copy includes a list of each item purchased by the customer during his or her current transaction. Such a list of current purchases is added to a master list which includes items purchased by the customer during previous use of the self-service checkout terminal 10 or other terminals associated with the retailer's operation during previous visits to the retailer's store. Hence, by adding the items purchased during the customer's current checkout transaction, a table or list may be maintained in the card memory device 28 which includes a record of each of the items previously purchased by the customer during a given time period. Moreover, such a list would include a total dollar amount spent during the current transaction along with any previous transactions. It should be appreciated that additional retail history information may also be stored in the card memory device 28 of the customer's smart card. For example, the profit margin associated with selected or all of the customer's items for purchase may also be stored in the card memory device 28 of the smart card 44. Once the required retail history information has been updated in the card memory device 28 of the smart card 44, the routine 58 advances to step 82.

In step 82, the processing unit analyzes the updated retail history information stored in the customer profile associated with the current customer. In particular, the processing unit 26 compares the customer's retail history information (as updated in step 80) to predetermined eligibility requirements in order to determine if the customer qualifies for a loyalty reward or incentive. If the customer qualifies for an reward or incentive, the routine 58 advances to step 84. If the customer does not qualify for an reward or incentive, the customer's smart card 44 is ejected from the smart card interface device 30 and the routine 58 then ends thereby placing the general routine 50 (see FIG. 4) in the idle state (i.e. step 52) until initialized by a subsequent customer.

In step 84, the processing unit 26 operates the self-service checkout terminal 10 so as to perform a customer-specific retail function based on the analysis of the customer's retail history information. In particular, if the customer qualifies for a coupon or voucher, the processing unit 26 determines from the customer's retail history information a coupon or voucher which is likely to be redeemed by the customer and thereafter stores an electronic copy of the coupon or voucher in the card memory device 28 of the customer's smart card 44. For example, if the customer frequently purchases taco sauce and seasoning, the processing unit 26 may store an electronic coupon for taco shells on the customer's smart card 44 if the customer meets predetermined requirements (as determined in step 82). Similarly, if the customer qualifies for a gift certificate, the processing unit 26 stores an electronic copy of the gift certificate in the card memory device 28 of the customer's smart card 44. Once the customer's reward or incentive has been electronically issued, the customer's smart card 44 is ejected from the smart card interface device 30 and the routine 58 then ends thereby placing the general routine 50 (see FIG. 4) in the idle state (i.e. step 52) until initialized by a subsequent customer.

Hence as described herein, utilizing the customer's smart card 44 to maintain retail history information for use in administration of a customer loyalty program has numerous advantages over systems and methods which have heretofore been designed. For example, utilizing the customer's smart card to maintain retail history information advantageously eliminates the need to maintain a computing device and associated large data storage device for the purpose of maintaining such information for each of the retailer's customers. Moreover, use of a smart card provides a relatively high security level against fraud since commercially available smart cards are generally configurable with elaborate encryption schemes to prevent fraudulent use thereof.

While the invention has been illustrated and described in detail in the drawings and foregoing description, such an illustration and description is to be considered as exemplary and not restrictive in character, it being understood that only the preferred embodiment has been shown and described and that all changes and modifications that come within the scope of the invention are desired to be protected.

For example, the smart card 44 may be configured so as to track purchases based on the gross margin return associated with a given customer's items for purchase. In particular, each item purchased by the customer has a profit margin associated therewith which may be tracked in order to reward the customer if he or she is consistently purchasing items with relatively high profit margins. For example, the smart card 44 may be configured to track the number or dollar amount of items which have (1) a negative profit margin (e.g. loss leaders), (2) a relatively low (less than 1 % or even zero) profit margin, (3) a profit margin of 2-4%, (4) a profit margin of 4-5%, and (5) a profit margin of greater than 5%. The customer may then be rewarded (e.g. given a coupon or gift certificate) when his or her purchases of a given profit margin range exceed a predetermined amount. Alternatively, it should be appreciated that the profit margin associated with the customer's entire transaction may also be tracked in a similar manner if the smart card 44 is so configured.

## Claims

1. A method of operating a retail system having a plurality of retail checkout terminals associated therewith, comprising the steps of:
retrieving retail history information associated with a customer's previous use of said retail checkout terminals from a customer profile stored in a card memory device of a smart card; and
operating one of said retail checkout terminals so as to perform a customer-specific retail function based on said retail history information.

2. A method as claimed in claim 1, comprising the steps of:
generating an item-entered control signal when an item for purchase is entered into said checkout terminal; and
entering a record corresponding to said item for purchase in said customer profile stored in said card memory device of said smart card in response to generation of said item-entered control signal.

3. A method as claimed in claim 1 or claim 2, wherein said step of operating said checkout terminal so as to perform said customer-specific retail function includes the step of storing an electronic coupon in said card memory device of said smart card based on said retail history information.

4. A method as claimed in any of claims 1 to 3, wherein said step of operating said checkout terminal so as to perform said customer-specific retail function includes the step of storing an electronic gift certificate in said card memory device of said smart card based on said retail history information.

5. A method of as claimed in any preceding claim, comprising the steps of:
generating an end-of-transaction control signal when a last item associated with a retail transaction has been entered into said one of said number of retail checkout terminals; and
storing a total dollar amount of said retail transaction in said card memory device of said smart card in response to generation of said end-of-transaction control signal.

6. A method as claimed in any preceding claim, comprising the steps of:
retrieving demographic information associated with a customer from said customer profile stored in said card memory device of said smart card; and
storing said demographic information in a customer demographic database maintained on a mass storage device associated with said number of retail checkout terminals.

7. A method of operating a retail checkout terminal, comprising the steps of:
generating an item-entered control signal when the first of a customer's items for purchase is entered into said retail checkout terminal;
storing a first record corresponding to said first item in a terminal transaction table maintained in a terminal memory device associated with said retail checkout terminal in response to generation of said item-entered control signal; and
transferring said first record from said terminal transaction table to a card transaction table maintained in a card memory device associated with a smart card.

8. A method as claimed in claim 7, comprising the step of generating an end-of-transaction control signal when the last of said customer's items for purchase has been entered into said retail checkout terminal, wherein said transferring step is performed in response to generation of said end-of-transaction control signal.

9. A method as claimed in claim 7 or claim 8, comprising the steps of:
analyzing said customer's items for purchase; and
storing an electronic coupon in said card memory device of said smart card based on said analyzing step.

10. A method of claim as claimed in any of claims 7 to 9 comprising the steps of:
analyzing said customer's items for purchase; and
storing an electronic gift certificate in said card memory device of said smart card based on said analyzing step.

11. A method as claimed in claim 9 or claim 10, wherein said analyzing step includes the step of determining a total dollar amount of said customer's items for purchase.

12. A method as claimed in any of claims 7 to 11 comprising the steps of:
retrieving demographic information associated with a customer from said customer profile stored in said card memory device of said smart card; and
storing said demographic information in a customer demographic database maintained on a mass storage device associated with said retail checkout terminal.

13. A retail checkout terminal, comprising:
an item entry device for entering a product code associated with an item for purchase;
a smart card interface device which is operable to (i) retrieve information from a card memory device of a smart card, and (ii) transfer information to said card memory device of said smart card;
a processing unit electrically coupled to both said item entry device and said smart card interface device; and
a terminal memory device electrically coupled to said processing unit, wherein said terminal memory device has stored therein a plurality of instructions which, when executed by said processing unit, causes said processing unit to:
(a) retrieve retail history information associated with a customer's previous use of said retail checkout terminal from a customer profile stored in said card memory device of said smart card, and
(b) operate said retail checkout terminal so as to perform a customer-specific retail function based on said retail history information.

14. A retail checkout terminal as claimed in claim 13, wherein said plurality of instructions, when executed by said processing unit, causes said processing unit to:
(a) generate an item-entered control signal when said item for purchase is entered with said item entry device, and
(b) enter a record corresponding to said item for purchase in said customer profile stored in said card memory device of said smart card in response to generation of said item-entered control signal.

15. A retail checkout terminal as claimed in claim 13 or claim 14, wherein said plurality of instructions, when executed by said processing unit, causes said processing unit to store an electronic coupon in said card memory device of said smart card based on said retail history information.

16. A retail checkout terminal as claimed in any of claims 13 to 15, wherein said plurality of instructions, when executed by said processing unit, causes said processing unit to store an electronic gift certificate in said card memory device of said smart card based on said retail history information.

17. A retail checkout terminal as claimed in any of claims 13 to 18, wherein said plurality of instructions, when executed by said processing unit, causes said processing unit to:
(a) generate an end-of-transaction control signal when a retail transaction has been completed, and
(b) store a total dollar amount of said retail transaction in said card memory device of said smart card in response to generation of said end-of-transaction control signal.

18. A retail checkout terminal as claimed in any of claims 13 to 17, wherein said plurality of instructions, when executed by said processing unit, causes said processing unit to:
(a) retrieve demographic information associated with a customer from said customer profile stored in said card memory device of said smart card, and
(b) store said demographic information in a customer demographic database maintained on a mass storage device.
